# EUROPÄISCHE PATENTSCHRIFT

(11) **EP 0 604 797 B1**
(45) Veröffentlichungstag und Bekanntmachung des Hinweises auf die Patenterteilung: **18.03.1998**
(21) Anmeldenummer: 93119730.5
(22) Anmeldetag: 08.12.1993
(51) Int. Cl.: H02K 15/04, H02K 3/28

(54) **Verfahren und Vorrichtung zur Herstellung einer Wellenwicklung, insbesondere für Drehstromgeneratoren**
Method and device for the production of a wave winding, in particular for three phase alternators
Procédé et dispositif pour la fabrication d'un enroulement ondulé, en particulier pour alternateurs triphasés

(30) Priorität: 30.12.1992 DE 4244488
(43) Veröffentlichungstag der Anmeldung: 06.07.1994
(73) Patentinhaber: STATOMAT SPEZIALMASCHINEN GMBH, D-61138 Niederdorfelden (DE)
(72) Erfinder: Leame, Filippo, D-61137 Schöneck (DE)
(74) Vertreter: Jochem, Bernd, Dipl.-Wirtsch.-Ing.

(56) Entgegenhaltungen:
- EP-A- 0 209 091
- EP-A- 0 278 153
- EP-A- 0 598 296
- DE-A- 3 546 512
- US-A- 4 739 807

## Beschreibung

Die Erfindung betrifft ein Verfahren zur Herstellung einer Wellenwicklung, insbesondere für Drehstromgeneratoren, sowie eine Vorrichtung zu dessen Durchführung. Bevorzugte Anwendung finden solche Verfahren und Vorrichtungen bei der Herstellung der Statoren für Kraftfahrzeug-Lichtmaschinen.

Bei einfachen, unverteilten Wellenwicklungen ist für jede Phase eine einzige, wellenförmige Wicklung vorhanden, wobei sämtliche Drahtabschnitte, die sich durch eine bestimmte Nut des Statorblechpakets erstrecken, an dessen Stirnseiten jeweils in dieselbe Umfangsrichtung, d. h. in Form eines einzigen Stranges, zur nächsten aufnehmenden Nut hin umgebogen sind (siehe DE 29 21 114 A1, Fig. 1 und EP 0 226 550 B1). Dabei ergibt sich eine ungleichmäßige Verteilung des Drahts in den über die Statorstirnseiten vorstehenden Wicklungsköpfen. Dort kreuzen sich die verhältnismäßig starken Wicklungsstränge und verhindern einen hohen Füllfaktor. Auch die Kühlung ist ungleichmäßig. Deshalb ist in der Regel eine sog. verteilte oder Zweischichtwellenwicklung vorzuziehen, bei der die in einer Nut des Statorblechpakets liegenden Drahtabschnitte auf jeder Stirnseite des Stators teilweise in die eine und teilweise in die andere Umfangsrichtung umgebogen sind (siehe DE 29 21 114 A1, Fig. 2).

Wellenwicklungen können in automatischen Fertigungsverfahren entweder direkt Windung für Windung in die Nuten eines Statorblechpakets eingeführt werden, wobei die Wickeldüse längs der Nuten geführt wird, oder sie können vorgewickelt und dann mittels eines Einziehwerkzeugs in das Statorblechpaket eingezogen werden. Das zuerst genannte Verfahren ist verhältnismäßig langsam, das letztere kann schneller sein, hat aber je nach Ausführungsvariante bisher verschiedene andere Nachteile. Wenn die Wellenwicklung z. B. gemäß DE 23 51 952 B2 oder DE 31 20 865 A1 im wesentlichen rund vorgewickelt, dann zu einem stern- bzw. wellenförmigen Querschnitt verformt und dann eingezogen wird, können zwar auch Zweischichtwellenwicklungen hergestellt werden, aber die beiden Schichten können nicht ohne Drahtunterbrechung nacheinander gewickelt werden, sondern müssen nach dem Einziehen, bei dem sich die in der DE 35 22 085 C2 gezeigte Situation ergibt, durch eine sog. Schaltverbindung miteinander verbunden werden. Derselbe Mangel tritt auch dann auf, wenn gemäß DE 33 43 390 C2 eine Spule auf eine Innenform gewickelt und anschließend durch radial einfahrbare, äußere Formelemente, stern- bzw. wellenförmig verformt wird, weil der große Querschnittsunterschied zwischen einer zuvor gewickelten, bereits verformten Spule und der anschließend zu wickelnden Spule eine zu lange Drahtverbindung ergäbe.

Die US-PS 4,739,807 beschreibt ein Verfahren, bei dem durch eine um eine feststehende Schablone mit zwei gegenüberliegend radial vorstehenden Flügeln umlaufende Wickeldüse Windungen erzeugt werden, die nach Beendigung des Wickelvorgangs durch äußere Formelemente zwischen den beiden Flügeln nach einwärts zusammengedrückt und verformt werden. Während der Verformung müssen die Flügel der Schablone durch eine Nockensteuerung entsprechend dem Ausmaß der Verformung angenähert werden. Der dadurch bedingte Querschnittsunterschied der verformten Spule gegenüber den nachfolgend auf die wieder ausgefahrenen Flügel gewickelten Windungen würde ebenso wie bei der Vorrichtung der DE 33 43 390 C2 eine zu lange Drahtverbindung ergeben, und zwar vor allem dann, wenn die Schablone mehr als zwei Flügel haben soll, zwischen denen der Wickeldraht radial nach einwärts verformt wird. Darüber hinaus ist der Draht beim nachträglichen Verformen der fertig gewickelten Spulen sehr hohen Verformungskräften ausgesetzt.

Wenn, wie alternativ in der US-PS 4,739,807 und außerdem in der JP 56-53936 B2 vorgesehen, beim Wickelvorgang die Wickeldüse stillsteht und die Schablone rotierend angetrieben wird, besteht grundsätzlich überhaupt keine Möglichkeit, die beiden Schichten einer Zweischichtwicklung ohne Drahtunterbrechung hintereinander zu wickeln, denn die rotierende Schablone würde beim Wickeln der zweiten Schicht den Draht aus der ersten Schicht wieder zurückziehen. Daran ändert sich auch dann nichts, wenn gemäß der JP-56-53936 B2 äußere Formelemente den Wickeldraht schon während des Wickelvorgangs Windung für Windung verformen, indem sie kurvengesteuert einzeln radial zwischen die Flügel der Schablone einfahren. Diese bekannte Vorrichtung hat außerdem den weiteren Nachteil, daß sich die äußeren Formelemente auch in ihrer nach außen zurückgezogenen Stellung radial zwischen der Schablone und der Wickeldüse befinden, so daß sie eine zusätzliche, axiale Bewegung ausführen müssen, um beim Vorbeilauf der Wickeldüse dem Draht auszuweichen.

Ein Verfahren, um eine Zweischichtwellenwicklung ohne Drahtunterbrechung zu erhalten, ist in der EP 0 209 091 B1 beschrieben. Danach wird zunächst eine Wellenwicklung mit der Windungszahl beider Schichten erzeugt und diese dann geteilt, gewendet und am Umfang versetzt. Bereits die Aufzählung der verschiedenen nacheinander auszuführenden Arbeitsschritte zeigt, daß das Verfahren sehr kompliziert ist, wenn es automatisch durchgeführt werden soll.

Schließlich ist es durch die DE 24 06 612 B2 auch bereits bekannt, eine Wellenwicklung dadurch zu erzeugen, daß der Wikkeldraht aus einer Wickeldüse herausgeschoben und Windung für Windung wellenförmig in einen aus einer Vielzahl von Stäben gebildeten Wicklungsaufnehmer gelegt wird, indem die Wickeldüse auf einer wellenförmigen Umlaufbahn geführt wird. Bei diesem Verfahren ist es schwierig, mit Genauigkeit eine bestimmte Form der Wicklung zu erzeugen, da sie nur an wenigen Punkten lose abgestützt wird. Außerdem dauert der Wickelvorgang sehr lange.

In der erst nach dem Prioritätstag der vorliegenden Anmeldung veröffentlichten EP-A-0 598 296 sind ein Verfahren und eine Vorrichtung zur Herstellung einer Wellenwicklung vorgeschlagen, bei welchen eine bestimmte Anzahl konzentrischer, wellenförmiger Windungen erzeugt wird, indem Wickeldraht von einer auf einer Kreisbahn umlaufenden Wickeldüse auf eine innerhalb der Kreisbahn angeordnete, feststehende Schablone mit einer bestimmten Anzahl radial vorstehender Flügel gewickelt und während der Wickelbewegung durch einzeln radial einwärts bewegte, äußere Formelemente zwischen den Flügeln radial nach innen gedrückt und verformt wird. Die äußeren Formelemente befinden sich dabei immer radial innerhalb der Umlaufbahn der Wickeldüse. Damit diese sowie der Wickeldraht zunächst an einem Formelement vorbeilaufen können, bevor es radial einfährt und den Wickeldraht zwischen die Flügel der Schablone drückt, führen die äußeren Formelemente Schwenkbewegungen aus, bei denen sie erst während des radialen Einwärtsschwenkens axial in die Umlaufebene der Wickeldüse bewegt und während des radialen Auswärtsschwenkens wieder axial aus dieser Ebene zurückgezogen werden.

Der Erfindung liegt die Aufgabe zugrunde, ein Verfahren und eine zu dessen Durchführung geeignete Vorrichtung zu schaffen, welche mit kurzer Taktzeit die Herstellung sowohl von einschichtigen Wellenwicklungen als auch von Zweischichtwellenwicklungen mit ununterbrochener, kurzer Drahtverbindung zwischen den beiden Schichten gestatten.

Vorstehende Aufgabe wird verfahrensmäßig durch die Merkmale des Anspruchs 1 in dessen länderspezifischer Fassung gelöst.

Die Erfindung bietet den Vorteil, daß der Draht bereits bei der Erzeugung einer einzelnen Windung zwischen der Schablone und den äußeren Formelementen die vorgesehene Wellenform der Wicklung, und zwar mit großer Genauigkeit, erhält. Bei der Herstellung einer Zweischichtwellenwicklung hat deren erste Schicht unabhängig von der Zahl der Pole des Generators bzw. der Flügel der Schablone nach dem Abstreifen von der Schablone denselben Querschnitt wie die unmittelbar anschließend mit umgekehrter Drehrichtung zu wickelnde zweite Schicht, so daß beide Schichten ohne Drahtunterbrechung nacheinander gewikkelt und von der Schablone in ein Übertragungswerkzeug abgestreift werden können, welches dazu in herkömmlicher Weise zwischen der Aufnahme der ersten und der zweiten Schicht eine Drehschaltbewegung ausführt.

Eine Vorrichtung zur Durchführung des neuen Verfahrens umfaßt die Merkmale des Anspruchs 6 in dessen länderspezifischer Fassung.

Bei dieser Vorrichtung kann man sich den Vorteil zu nutze machen, daß das Wickeln mittels einer umlaufenden Wickeldüse auf eine feststehende Schablone und das Abstreifen der Drahtwindungen oder der Wicklung von der Schablone in ein Übertragungswerkzeug in Form einer Übertragungszange oder eines Einziehwerkzeugs eine erprobte Technik beim Bewickeln von Statorblechpaketen mit einfachen runden oder ovalen Spulen darstellt. Die erfindungsgemäße Vorrichtung unterscheidet sich hiervon funktionell im wesentlichen nur durch die während des Wickelvorgangs einzeln radial einfahrbaren äußeren Formelemente.

Eine häufig gestellte Forderung an Wickelvorrichtungen verlangt, daß Umstellungen auf eine andere Pakethöhe des Statorblechpakets schnell und einfach vorgenommen werden können. Zu diesem Zweck wird in bevorzugter Ausgestaltung der Erfindung vorgeschlagen, daß die radiale Länge der Flügel der Schablone einstellbar ist. Dies ist die einzige Maßnahme, die erforderlich ist, um die neue Wickelvorrichtung auf eine andere Pakethöhe umrüsten zu können.

Weitere bevorzugte Ausgestaltungsmerkmale ergeben sich aus den Patentansprüchen und der nachfolgenden Beschreibung eines Ausführungsbeispiels anhand der beiliegenden Zeichnung. Darin zeigen:
- Fig. 1: einen vereinfachten senkrechten Querschnitt durch eine Wickelvorrichtung zur Herstellung von Wellenwicklungen;
- Fig. 2: einen horizontalen Querschnitt durch den unteren Teil der Vorrichtung nach Fig. 1;
- Fig. 3: einen Ausschnitt aus Fig. 2 in größerem Maßstab und
- Fig. 4: in einer Ansicht entsprechend Fig. 3 die Teile der Vorrichtung in einer anderen Stellung.

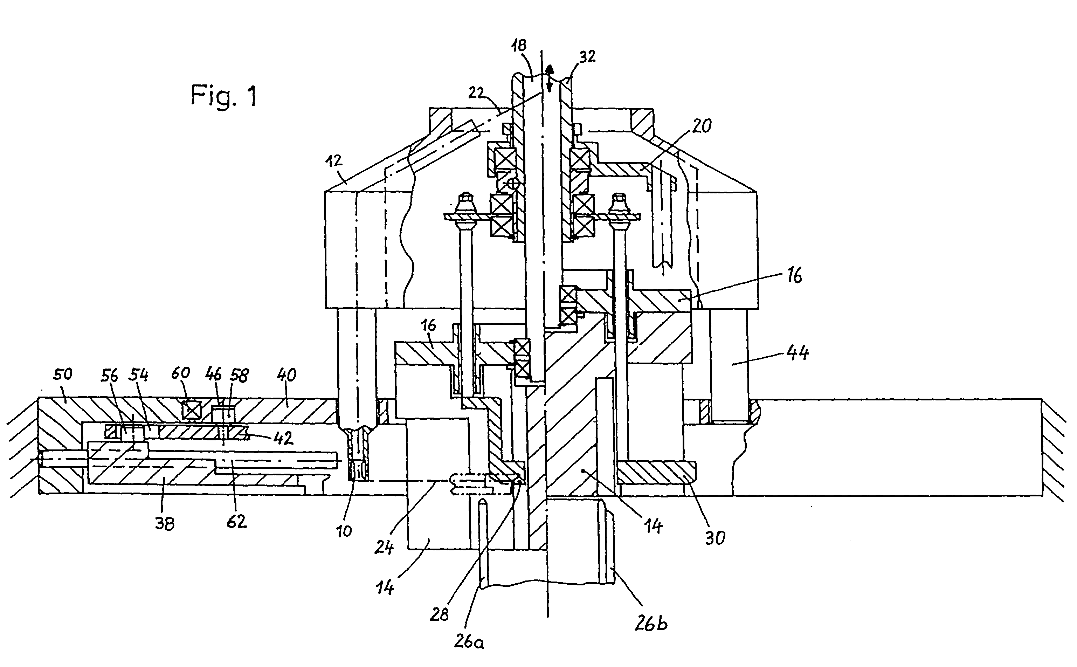

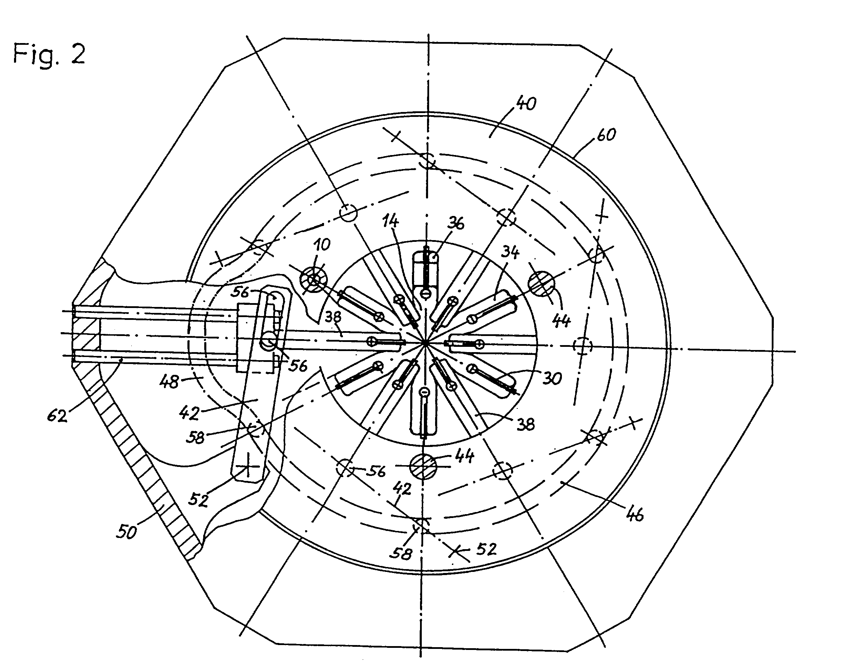

Die in Fig. 1 und 2 dargestellte Wickelvorrichtung hat eine in herkömmlicher Weise umlaufend angetriebene Wickeldüse 10. Der sie tragende Körper 12, dessen Drehantrieb nicht gezeigt ist, wird normalerweise als Flyer bezeichnet. Die Wickeldüse 10 rotiert um eine Schablone 14, welche austauschbar an einem Schablonenträger 16 befestigt ist, der seinerseits an einer zusammen mit dem Flyer 12 rotierenden Welle 18 axial und radial gelagert ist. Die Welle 18 ist durch einen nicht gezeigten Antrieb axial verschiebbar. Damit die Schablone 14 nicht zusammen mit dem Flyer 12 und der Welle 18 rotiert, ist in bekannter Weise ein in der Zeichnung nur angedeutetes Stützgetriebe 20 vorgesehen, welches mit einem undrehbar gehaltenen Teil am Schablonenträger 16 angreift und dadurch auch diesen gegen Drehung hält. Ein derartiges Stützgetriebe ist z. B. in der EP 278 153 A 1 beschrieben.

Der mit 22 bezeichnete Wickeldraht wird zentral über die Welle 18 und geeignete Führungen im Flyer 12 der Wickeldüse 10 zugeführt. Diese erzeugt bei ihrem Umlauf Drahtwindungen 24 auf der Schablone 14. Um die Drahtwindungen 24 axial von der Schablone 14 abzustreifen und auf ein Übertragungswerkzeug 26a oder 26b zu übertragen, sind Abstreifer 28, 30 vorhanden, die am Schablonenträger 16 verschieblich geführt und an einer Hohlwelle 32 axial gelagert sind, welche ebenfalls zusammen mit dem Flyer 12 und der Welle 18 rotiert und durch einen axialen Antrieb unabhängig von der Welle 18 axial verschieblich ist. Zusätzlich kann in bekannter Weise ein Taumelscheibenantrieb die Abstreifer 28, 30 während des Wickelvorgangs bei jeder Umdrehung des Flyers 12 eine kurze hin- und hergehende axiale Bewegung durch die Wickelebene hindurch ausführen lassen, die sich auf dem Niveau der Wickeldüse 10 befindet. Der grundsätzliche Aufbau solcher Wickelvorrichtungen mit Flyer, Schablonenträger, Stützgetriebe und Abstreifern ist bekannt. Nur beispielhaft sei hier auf die DE-PS 23 09 837 und die EP 67 225 B 1 verwiesen.

Auch die Übertragungswerkzeuge sind in ihrem Aufbau und in ihrer Funktion grundsätzlich vorbekannt. Bei 26a ist z. B. eine aus einem Kranz paralleler Stäbe bestehende Übertragungszange angedeutet, mittels welcher die auf der Schablone 14 erzeugte Wicklung auf ein Einziehwerkzeug übertragen werden kann, mit dessen Hilfe die Wicklung dann in ein Statorblechpaket eingezogen wird. Alternativ besteht die Möglichkeit, die Wicklung unmittelbar von der Schablone 14 auf ein bei 26b angedeutetes Einziehwerkzeug zu übertragen, welches nach der Aufnahme der in einem Arbeitsvorgang einzuziehenden Wicklungen zu einer Einziehvorrichtung transportiert wird, wo dann ein Statorblechpaket aufgesetzt und die Wicklungen eingezogen werden.

Während des Wickelvorgangs kann in der Weise gearbeitet werden, daß zunächst sämtliche Drahtwindungen einer Wicklung auf die Schablone 14 gewickelt werden und am Ende alle gemeinsam in einem einzigen Abstreifvorgang von der Schablone 14 abgestreift werden. Bei dieser Arbeitsweise verharren die Abstreifer während des Wickelvorgangs oberhalb der durch das Niveau der Wickeldüse 10 bestimmten Wickelebene. Damit auf der Schablone 14 eine einlagige Wicklung erhalten wird, senkt man bei jeder Umdrehung der Wickeldüse 10 die Schablone kontinuierlich etwa um die Drahtstärke ab. Nachdem die vorbestimmte Anzahl Windungen auf der Schablone 14 erzeugt worden ist, wird sie zusammen mit dem Flyer 12 noch ein weiteres Stück abgesenkt, bis sich sämtliche Drahtwindungen 24 unterhalb der Oberkante des in Aussparungen der Schablone eindringenden Übertragungswerkzeugs 26a bzw. 26b befinden. Dann werden auch die Abstreifer 28, 30 bis unter die Oberkante des Übertragungswerkzeugs abgesenkt. Wenn anschließend die Schablone 14 nach oben zurückgezogen wird, während die Abstreifer auf ihrem unteren Niveau gehalten werden, wird die Wicklung von der Schablone abgestreift. Zuletzt fahren auch die Abstreifer wieder in ihre obere Stellung.

Alternativ besteht die Möglichkeit, schon während des Wickelvorgangs die meisten auf der Schablone erzeugten Drahtwindungen in das Übertragungswerkzeug 26a bzw. 26b abzustreifen. In diesem Fall steht die Schablone 14 während des Wickelvorgangs axial fest, und die Abstreifer 28, 30 führen die vorstehend erwähnte kurze, oszillierende Bewegung aus. Nach Beendigung des Wickelvorgangs braucht die Schablone 14 nur einen verhältnismäßig kurzen axialen Hub auszuführen, um die letzten noch auf der Schablone sitzenden Drahtwindungen unter die Oberkante des Übertragungswerkzeugs 26a bzw. 26b zu bringen, und dann werden diese Windungen mittels der ebenfalls bis unter die Oberkante des Übertragungswerkzeugs absenkbaren Abstreifer in derselben Weise von der Schablone abgestreift wie in dem Fall, wo alle Windungen gemeinsam abgestreift werden. Übereinstimmung besteht auch insofern, als vorzugsweise der Flyer 12 zusammen mit der Schablone 14 axial bewegt wird.

Abgesehen von der aus Fig. 2 ersichtlichen besonderen Form der Schablone 14 und der besonderen, unterschiedlichen Form der Abstreifer 28, 30 entspricht der vorstehend beschriebene Teil der neuen Vorrichtung im Aufbau und in der Funktion bekannten Wickelvorrichtung zur Herstellung einfacher, im wesentlichen runder, ovaler oder polygonaler Spulen, wie sie für Statoren elektrischer Motoren gebraucht werden. Nachfolgend werden nunmehr diejenigen Teile näher erläutert, welche zusätzlich erforderlich sind, um Wellenwicklungen herstellen zu können.

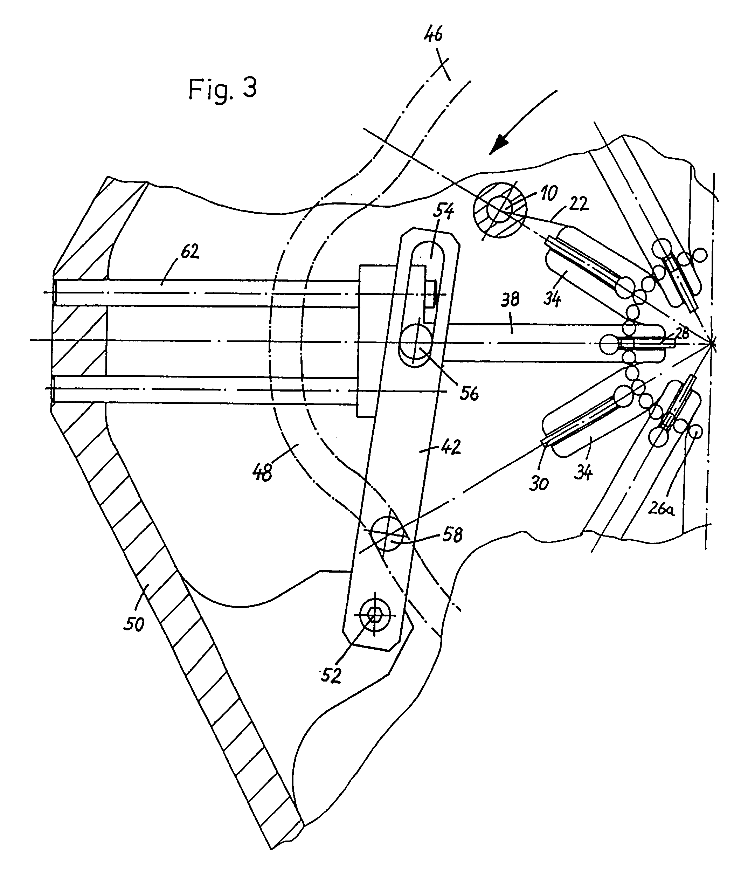

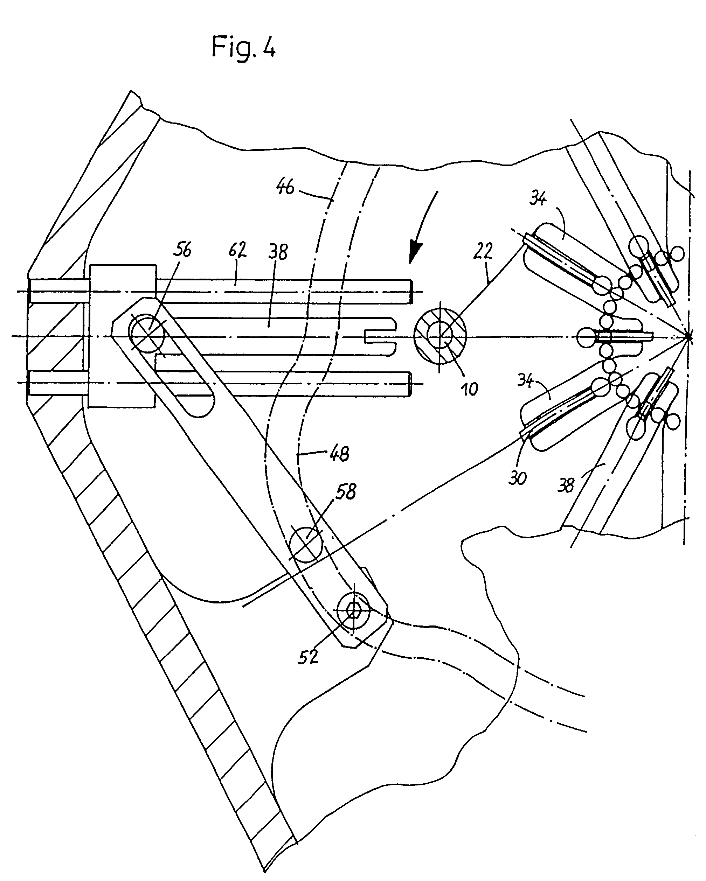

Zu diesem Zweck hat die im wesentlichen prismatische Schablone 14 einen sternförmigen Querschnitt mit im Beispielsfall sechs gleichmäßig über den Umfang verteilten, sich radial erstreckenden Flügeln 34. Die Schablone kann z. B. einstückig ausgebildet sein und in den Flügeln Längsschlitze haben, in denen die axial verschieblichen Abstreifer 30 beweglich sind. Die Schlitze sind am freien Ende der Flügel 34 offen, und die Abstreifer 30 ragen radial aus den Flügeln 34 hervor, um an den Flügelenden beim Abstreifvorgang die Drahtwindungen zu erfassen und von der Schablone 14 abzustreifen. Wie aus Fig. 3 und 4 ersichtlich, sind in die Flügel 34 außerdem von unten her jeweils drei Bohrungen eingearbeitet, in welche die Stäbe der Übertragungszange 26a eindringen können.

Alternativ kann aber auch eine mehrteilige Schablone 14 am Schablonenträger 16 befestigt werden, bei welcher, wie in Fig. 2 nur bei 36 angedeutet, der äußere Teil jedes Flügels 34 relativ zu seinem radial inneren Teil bzw. dem Kern der Schablone radial verstellbar ist. Mittels einer solchen radial veränderlichen Schablone kann die Wickelvorrichtung auf einfache Weise umgestellt werden, wenn Statorblechpakete unterschiedlicher Pakethöhe bewickelt werden sollen.

Zum Zusammenwirken mit der sternförmigen Schablone 14 bei der Formung einer wellenförmigen Wicklung hat die Vorrichtung sechs äußere Formelemente in Form von Schiebern 38, die jeweils auf der Winkelhalbierenden zwischen zwei Flügeln 34 radial von außen zwischen diese einfahrbar sind. In der ganz eingefahrenen Stellung besteht nur ein verhältnismäßig schmaler Spalt zwischen den radial inneren Enden der Schieber 38 und der entsprechend geformten Schablone 14, so daß der Wikkeldraht in dem Spalt zwar genau geführt, aber nicht geklemmt ist.

Auch die Schieber 38 sind an ihrem radial inneren Ende mit axialen, nach radial innen offenen Schlitzen versehen, in welche in der radial inneren Stellung die Abstreifer 28 einfahren können, wobei sie nach radial innen aus den Schlitzen herausragen.

Die Steuerung und der Antrieb der Schieber 38 erfolgen mittels einer Kurvenscheibe 40 über Hebel 42. Die Kurvenscheibe 40 wird durch am Flyer 12 angebrachte Mitnehmerarme 44 bei dessen Drehbewegung mitgenommen. In die Kurvenscheibe 40 ist eine Führungskurve 46 eingearbeitet, welche über etwa 300° eine Kreisbahn ist. Über die restlichen 60° bildet die Führungsbahn eine Ausbuchtung 48.

Jedem der Schieber 34 ist ein außerhalb der Umlaufbahn der Wickeldüse 10 angeordneter Hebel 42 zugeordnet. Die Hebel sind jeweils am Umfang seitlich versetzt neben den Schiebern 38 drehbar am ortsfesten Rahmen 50 der Vorrichtung gelagert. Der Drehpunkt des einen gezeigten Hebels 42 ist mit 52 bezeichnet. Am anderen Ende des Hebels 42 ist dieser mit einem Langloch 54 versehen, in welches ein am Schieber 38 angebrachter Mitnehmerzapfen 56 eingreift. Zwischen dem Drehpunkt 52 und dem Langloch 54 ist an dem Hebel 42 eine Kurvenrolle 58 gelagert, welche in die Führungskurve 46 der am Umfang über eine Lagerung 60 am Rahmen 50 gelagerten Kurvenscheibe 40 eingreift. Der durch den Hebel 42 bewegte Schieber 38 gleitet jeweils auf zwei Führungsstangen 62.

Die Hebelverhältnisse, d. h. die relative Lage zwischen dem Drehpunkt 52 und der Kurvenrolle 58 sowie zwischen dem Drehpunkt 52 und dem Mitnehmerzapfen 56 sowie die Stellung des Hebels 42 mit Bezug auf die Führungskurve 46 sind so gewählt, daß jeder Schieber 38 zwischen der bereits erwähnten radial inneren Stellung gemäß Fig. 3 und einer in Fig. 4 gezeigten radial äußeren Stellung hin- und herverfahrbar ist, während die Kurvenrolle 58 die Ausbuchtung 48 durchläuft. In der radial äußeren Stellung befindet sich das innere Ende der Schieber 38 radial außerhalb der Wickeldüse 10, so daß sich diese auf ihrer kreisförmigen Umlaufbahn an dem in der Wikkelebene liegenden Schieber 38 vorbeibewegen kann.

In Umfangsrichtung ist die Lage des Drehpunkts 52 und der Kurvenrolle 58 mit Bezug auf den jeweils gesteuerten Schieber 38, die Wickeldüse 10 und die Ausbuchtung 48 der Führungskurve 46 so gewählt, daß die Auswärtsbewegung eines bestimmten Schiebers 38 erst beginnt, wenn sich die Wickeldüse 10, die sich dem Schieber 38 nähert, etwa bei dem diesem vorgelagerten Flügel 34 befindet (siehe Fig. 3). Die Ausbuchtung 48 der Führungskurve 46 bewirkt dann über den Hebel 42 eine sehr schnelle Rückzugsbewegung des Schiebers 38 nach außen, so daß er seine radial äußere Endstellung erreicht hat, bevor die Wickeldüse 10 die etwa 30° zwischen dem benachbarten Flügel 34 und dem Schieber 38 zurückgelegt hat. Auf dem weiteren Weg der Wickeldüse 10 von etwa 30° zwischen dem zurückgezogenen Schieber 38 und dem nächsten benachbarten Flügel 34 wird dann der Schieber 38 schon wieder durch den Hebel 42 in seine radial innere Stellung zurückgeführt und dort gehalten, solange sich die Kurvenrolle 58 längs des kreisförmigen Teils der Führungskurve 46 bewegt. Das Zurückziehen des Schiebers 38 nach radial außen kann ohne weiteres auch eher beginnen. Hierzu braucht nur die Ausbuchtung 48 verlängert zu werden.

Es versteht sich, daß statt des beschriebenen Antriebs der Schieber 38 mittels Führungskurve 46 und Hebel 42 auch andere gesteuerte Antriebe benutzt werden können, um die Schieber 38 aus der radial inneren Stellung in die radial äußere Stellung zurückzuziehen, so daß die Wickeldüse 10 passieren kann.

Durch den vorstehend beschriebenen Ablauf des Wickelvorgangs wird der aus der Wickeldüse 10 austretende Wickeldraht jeweils sofort, nachdem sich die Wickeldüse 10 an einem Schieber 38 vorbeibewegt hat, durch diesen radial nach innen zwischen die dem Schieber benachbarten beiden Flügel 34 gedrückt, wobei nicht nur wegen der Drehbewegung der Wickeldüse 10, sondern auch wegen der radialen Einwärtsbewegung des Schiebers 38 Draht aus der Wickeldüse 10 gezogen wird. Man erkennt, daß dabei schon während des Legens einer Drahtwindung auf die Schablone 14 der Draht zwischen den Flügeln 34 und den Schiebern 38 zur Wellenform verformt wird. In dieser Form wird die Wellenwicklung, wie oben beschrieben, entweder Windung für Windung bereits während des Wickelvorgangs oder nach dessen Beendigung insgesamt auf das Übertragungswerkzeug 26a oder 26b übergestreift, und es kann anschließend ohne weiteres mit entgegengesetzter Drehrichtung gewickelt werden, wobei in der Zwischenzeit zwischen den beiden Wickelvorgängen der Draht in an sich bekannter Weise durch eine Klemmeinrichtung gehalten, aber nicht durchtrennt wird. Die zweite Wicklung läßt sich in gleicher Weise auf das Übertragungswerkzeug 26a bzw. 26b übertragen, nachdem dieses um einen Drehschaltschritt weitergedreht worden ist. Die beiden Wicklungen sind dann nur durch eine kurze, ununterbrochene Drahtverbindung miteinander verbunden und können die beiden Schichten einer Zweischichtwellenwicklung bilden.

Je nach Gestaltung der Schablone 14 mit ihren Flügeln 34 und der Schieber 38 können beliebige Formen von Wellenwicklungen erzeugt werden, die dann zu jedem gewünschten Zweck verwendet werden können. Bevorzugt werden dabei Schablonen mit mehr als zwei Flügeln, weil sich dabei die vorstehend genannten Vorteile gegenüber den bekannten Vorrichtungen, bei denen die wellenförmige Formgebung erst nach dem Wickeln stattfindet, besonders deutlich hervortreten.

## Patentansprüche (Patentansprüche für folgende(n) Vertragsstaat(en): DE, FR, GB, IT)

1. Verfahren zur Herstellung einer Wellenwicklung, insbesondere für Drehstromgeneratoren, bei welchem eine bestimmte Anzahl konzentrischer, wellenförmiger Windungen erzeugt wird, indem Wickeldraht (22) von einer auf einer Kreisbahn umlaufenden Wickeldüse (10) auf eine innerhalb der Kreisbahn angeordnete, feststehende Schablone (14) mit einer bestimmten Anzahl radial vorstehender Flügel (34) gewickelt und während der Wickelbewegung durch einzeln von außerhalb der Umlaufbahn der Wickeldüse (10) radial einwärts bewegte, äußere Formelemente (38) zwischen den Flügeln (34) radial nach innen gedrückt und verformt wird.

2. Verfahren nach Anspruch 1, **dadurch gekennzeichnet,** daß der Wickeldraht (22) von den äußeren Formelementen (38) gegen den radial inneren Bereich der Flanken der Flügel (34) angelegt wird.

3. Verfahren nach Anspruch 1 oder 2, **dadurch gekennzeichnet,** daß der Wickeldraht (22) während des Wickelvorgangs jeweils dann, wenn sich die umlaufende Wickeldüse (10) zwischen einem äußeren Formelement (38) und dem diesem in Bewegungsrichtung folgenden Flügel (34) befindet, von dem äußeren Formelement (38) radial nach innen gedrückt wird.

4. Verfahren nach einem der Ansprüche 1 bis 3, **dadurch gekennzeichnet,** daß schon während des Wickelvorgangs Windungen (24) von der Schablone (14) auf ein Übertragungswerkzeug (26a, 26b) übergestreift werden.

5. Verfahren nach einem der Ansprüche 1 bis 4, **dadurch gekennzeichnet,** daß zunächst ein erster Teil der Wellenwicklung einer Phase erzeugt und von der Schablone (14) auf ein Übertragungswerkzeug (26a, 26b) übergestreift wird und dann ohne Drahtunterbrechung ein zweiter Teil der Wellenwicklung mit umgekehrter Wickelrichtung erzeugt und derart am Umfang versetzt auf das Übertragungswerkzeug (26a, 26b) übergestreift wird, daß anschließend mit gleicher Stromrichtung durchflossene, achsparallele Abschnitte der beiden Teile der Wellenwicklung in dieselben Statornuten eingezogen werden.

6. Vorrichtung zur Durchführung des Verfahrens nach einem der Ansprüche 1 bis 5 mit einer relativ zu einer feststehenden Schablone (14) mit einer bestimmten Anzahl radial vorstehender Flügel (34) umlaufend antreibbaren Wickeldüse und äußeren Formelementen (38), welche durch einen während des Wickelvorgangs wirksamen Antrieb (42, 46, 48) bei jedem Umlauf der Wickeldüse (10) einzeln aus einer Stellung außerhalb der Umlaufbahn der Wickeldüse (10) radial zwischen die Flügel (34) der Schablone (14) einfahrbar und wieder zurückziehbar sind.

7. Vorrichtung nach Anspruch 6, **dadurch gekennzeichnet,** daß die äußeren Formelemente (38) im radial inneren Bereich dem Umriß des radial inneren Bereichs der Schablone (14, 34) angepaßt sind, wobei im radial eingefahrenen Zustand der äußeren Formelemente (38) jeweils ein Spalt zwischen diesem und der Schablone (14, 34) frei bleibt, der nur wenig breiter ist als der Durchmesser des Wickeldrahts (22).

8. Vorrichtung nach Anspruch 6 oder 7, **dadurch gekennzeichnet,** daß die radiale Länge der Flügel (34, 36) einstellbar ist.

9. Vorrichtung nach einem der Ansprüche 6 bis 8, **dadurch gekennzeichnet,** daß die äußeren Formelemente (38) im wesentlichen innerhalb der Zeitspanne, in welcher sich die umlaufende Wickeldüse (10) im Winkelbereich zwischen den beiden jeweils benachbarten Flügeln (34) befindet, aus ihrer zwischen die Flügel (34) eingefahrenen inneren Stellung zurückziehbar und wieder in die radial innere Stellung einfahrbar sind.

10. Vorrichtung nach einem der Ansprüche 6 bis 8, **dadurch gekennzeichnet,** daß die äußeren Formelemente (38) vor der Zeitspanne, in welcher sich die umlaufende Wickeldüse (10) im Winkelbereich zwischen den beiden jeweils benachbarten Flügeln (34) befindet, aus ihrer zwischen die Flügel (34) eingefahrenen inneren Stellung zurückziehbar und innerhalb dieser Zeitspanne wieder in die radial innere Stellung einfahrbar sind.

11. Vorrichtung nach einem der Ansprüche 6 bis 10, **dadurch gekennzeichnet,** daß jedes äußere Formelement durch einen ortsfest gelagerten Hebel (42) bewegbar ist, an dem eine Kurvenrolle (58) gelagert ist, welche mit einer zusammen mit der Wickeldüse (10) umlaufenden Führungskurve (46, 48) zusammenwirkt, die im wesentlichen eine Kreisform mit einer sich wenigstens etwa über den Winkelbereich zwischen zwei Flügeln (34) erstreckenden Aus- oder Einbuchtung hat.

12. Vorrichtung nach Anspruch 11, **dadurch gekennzeichnet,** daß der Hebel (42) außerhalb der Umlaufbahn der Wickeldüse (10) gelagert ist.

13. Vorrichtung nach einem der Ansprüche 6 bis 12, **dadurch gekennzeichnet,** daß an der während des Wickelvorgangs feststehenden Schablone (14, 16) axial bewegbare Abstreifer (28, 30) gelagert sind, welche bei jeder Umdrehung der Wickeldüse (10) eine kurze axiale Bewegung durch die Wickelebene hindurch in Richtung zum freien Ende der Schablone (14) und zurück ausführen, und daß die Flügel (34) der Schablone (14) und die äußeren Formelemente (38) jeweils mit einem axialen Durchtrittsschlitz für einen Abstreifer (28, 30) versehen sind.

## Patentansprüche (Patentansprüche für folgende(n) Vertragsstaat(en): CH, LI)

1. Verfahren zur Herstellung einer Wellenwicklung, insbesondere für Drehstromgeneratoren, bei welchem eine bestimmte Anzahl konzentrischer, wellenförmiger Windungen erzeugt, wird, indem Wickeldraht (22) von einer auf einer Kreisbahn umlaufenden Wickeldüse (10) auf eine innerhalb der Kreisbahn angeordnete, feststehende Schablone (14) mit einer bestimmten Anzahl radial vorstehender Flügel (34) gewickelt und durch äußere Formelemente (38) zwischen den Flügeln (34) radial nach innen gedrückt und verformt wird, **dadurch gekennzeichnet,** daß die Verformung durch einzeln bewegte äußere Formelemente (38) während der Wikkelbewegung erfolgt.

2. Verfahren nach Anspruch 1, **dadurch gekennzeichnet,** daß der Wickeldraht (22) von den äußeren Formelementen (38) gegen den radial inneren Bereich der Flanken der Flügel (34) angelegt wird.

3. Verfahren nach Anspruch 1 oder 2, **dadurch gekennzeichnet,** daß der Wickeldraht (22) während des Wickelvorgangs jeweils dann, wenn sich die umlaufende Wickeldüse (10) zwischen einem äußeren Formelement (38) und dem diesem in Bewegungsrichtung folgenden Flügel (34) befindet, radial nach innen gedrückt wird.

4. Verfahren nach einem der Ansprüche 1 bis 3, **dadurch gekennzeichnet,** daß schon während des Wickelvorgangs Windungen (24) von der Schablone (14) auf ein Übertragungswerkzeug (26a, 26b) übergestreift werden.

5. Verfahren nach einem der Ansprüche 1 bis 4, **dadurch gekennzeichnet,** daß zunächst ein erster Teil der Wellenwicklung einer Phase erzeugt und von der Schablone (14) auf ein Übertragungswerkzeug (26a, 26b) übergestreift wird und dann ohne Drahtunterbrechung ein zweiter Teil der Wellenwicklung mit umgekehrter Wickelrichtung erzeugt und derart am Umfang versetzt auf das Übertragungswerkzeug (26a, 26b) übergestreift wird, daß anschließend mit gleicher Stromrichtung durchflossene, achsparallele Abschnitte der beiden Teile der Wellenwicklung in dieselben Statornuten eingezogen werden.

6. Vorrichtung zur Durchführung des Verfahrens nach einem der Ansprüche 1 bis 5 mit einer relativ zu einer feststehenden Schablone (14) mit einer bestimmten Anzahl radial vorstehender Flügel (34) umlaufend antreibbaren Wickeldüse und äußeren Formelementen (38), welche zwischen die Flügel (34) der Schablone (14) einfahrbar sind, **dadurch gekennzeichnet,** daß ein während des Wickelvorgangs wirksamer Antrieb (42, 46, 48) der äußeren Formelemente (38) vorhanden ist, durch welchen die Formelemente (38) bei jedem Umlauf der Wickeldüse (10) einzeln radial zwischen die Flügel (34) der Schablone (14) einfahrbar und wieder zurückziehbar sind.

7. Vorrichtung nach Anspruch 6, **dadurch gekennzeichnet,** daß die äußeren Formelemente (38) im radial inneren Bereich dem Umriß des radial inneren Bereichs der Schablone (14, 34) angepaßt sind, wobei im radial eingefahrenen Zustand der äußeren Formelemente (38) jeweils ein Spalt zwischen diesem und der Schablone (14, 34) frei bleibt, der nur wenig breiter ist als der Durchmesser des Wickeldrahts (22).

8. Vorrichtung nach Anspruch 6 oder 7, **dadurch gekennzeichnet,** daß die radiale Länge der Flügel (34, 36) einstellbar ist.

9. Vorrichtung nach einem der Ansprüche 6 bis 8, **dadurch gekennzeichnet**, daß die äußeren Formelemente (38) im wesentlichen innerhalb der Zeitspanne, in welcher sich die umlaufende Wickeldüse (10) im Winkelbereich zwischen den beiden jeweils benachbarten Flügeln (34) befindet, aus ihrer zwischen die Flügel (34) eingefahrenen inneren Stellung zurückziehbar und wieder in die radial innere Stellung einfahrbar sind, wobei jedes äußere Formelement (38) auch schon zurückziehbar ist, bevor die Wickeldüse (10) den ersten benachbarten Flügel (34) erreicht.

10. Vorrichtung nach Anspruch 9, **dadurch gekennzeichnet,** daß die äußeren Formelemente (38) bis in eine Stellung radial außerhalb der Umlaufbahn der Wickeldüse (10) zurückziehbar sind.

11. Vorrichtung nach einem der Ansprüche 6 bis 10, **dadurch gekennzeichnet**, daß jedes äußere Formelement durch einen ortsfest gelagerten Hebel (42) bewegbar ist, an dem eine Kurvenrolle (58) gelagert ist, welche mit einer zusammen mit der Wickeldüse (10) umlaufenden Führungskurve (46, 48) zusammenwirkt, die im wesentlichen eine Kreisform mit einer sich wenigstens etwa über den Winkelbereich zwischen zwei Flügeln (34) erstreckenden Aus- oder Einbuchtung hat.

12. Vorrichtung nach Anspruch 11, **dadurch gekennzeichnet**, daß der Hebel (42) außerhalb der Umlaufbahn der Wickeldüse (10) gelagert ist.

13. Vorrichtung nach einem der Ansprüche 6 bis 12, **dadurch gekennzeichnet**, daß in an sich bekannter Weise an einer während des Wickelvorgangs feststehenden Schablone (14, 16) axial bewegbare Abstreifer (28, 30) gelagert sind, welche bei jeder Umdrehung der Wickeldüse (10) eine kurze axiale Bewegung durch die Wickelebene hindurch in Richtung zum freien Ende der Schablone (14) und zurück ausführen, und daß die Flügel (34) der Schablone (14) und die äußeren Formelemente (38) jeweils mit einem axialen Durchtrittsschlitz für einen Abstreifer (28, 30) versehen sind.

## Claims (Claims for the following Contracting State(s): DE, FR, GB, IT)

1. A method of producing a wave winding, in particular for three-phase generators, in which a given number of concentric wave-like windings is produced in that winding wire (22) from a winding nozzle (10) rotating in a circular path is wound on to a stationary template (14) disposed within the circular path and having a given number of radially projecting vanes (34), and is pressed radially inwards and is deformed during the winding movement by outer forming elements (38) moved individually radially inwards between the vanes (34) from outside the orbit of the winding nozzle (10).

2. A method according to Claim 1, characterised in that the winding wire (22) is applied by the outer forming elements (38) against the radially inner region of the flanks of the vanes (34).

3. A method according to Claim 1 or 2, characterised in that the winding wire (22) is pressed radially inwards by the outer forming element (38) during the winding procedure whenever the rotating winding nozzle (10) is situated between an outer forming element (38) and the vane (34) following it in the movement direction.

4. A method according to any one of Claims 1 to 3, characterised in that already during the winding procedure windings (24) from the template (14) are slipped on to a transfer tool (26a,26b).

5. A method according to any one of Claims 1 to 4, characterised in that initially a first part of the wave winding of one phase is produced and is slipped from the template (14) on to a transfer tool (26a,26b), and then without interruption in the wire a second part of the wave winding is produced with inverse winding direction and is slipped on to the transfer tool (26a,26b) offset on the circumference in such a way that, subsequently, axially parallel portions of both parts of the wave winding, through which current flows in the same direction, are pulled into the same stator slots.

6. An apparatus for carrying out the method according to any one of Claims 1 to 5 with a winding nozzle which can be driven in rotating motion relative to a stationary template (14) with a given number of radially projecting vanes (34), and with outer forming elements (38) which can be inserted by a drive (42,46,48) which is operative during the winding procedure during each revolution of the winding nozzle (10) individually from a position outside the orbit of the winding nozzle (10) radially between the vanes (34) of the template (14) and then withdrawn.

7. An apparatus according to Claim 6, characterised in that in the radially inner region the outer forming elements (38) are adapted to the contour of the radially inner region of the template (14,34), wherein in the radially inserted condition of the outer forming elements (38) a respective gap is left free between the latter and the template (14,34) which is only slightly wider than the diameter of the winding wire (22).

8. An apparatus according to Claim 6 or 7, characterised in that the radial length of the vanes (34,36) is adjustable.

9. An apparatus according to any one of Claims 6 to 8, characterised in that substantially within the period of time in which the rotating winding nozzle (10) is situated in the angular region between the two respectively adjacent vanes (34) the outer forming elements (38) can be withdrawn from their inner position inserted between the vanes (34) and can be re-inserted into the radially inner position

10. An apparatus according to any one of Claims 6 to 8, characterised in that before the period of time in which the rotating winding nozzle (10) is situated in the angular region between the two respectively adjacent vanes (34) the outer forming elements (38) can be withdrawn from their inner position inserted between the vanes (34) and within this period they can be re-inserted into the radially inner position.

11. An apparatus according to any one of Claims 6 to 10, characterised in that each outer forming element can be moved by a stationarily mounted lever (42) on which is mounted a cam roller (58) which co-operates with a guide cam (46,48) which rotates together with the winding nozzle (10) and which is substantially of circular shape with a bulge or recess extending at least approximately over the angular region between two vanes (34).

12. An apparatus according to Claim 11, characterised in that the lever (42) is mounted outside the orbit of the winding nozzle (10).

13. An apparatus according to any one of Claims 6 to 12, characterised in that axially movable strippers (28,30) are mounted on a template (14,16) which is stationary during the winding procedure, which strippers during each revolution of the winding nozzle (10) carry out a short axial movement through the winding plane towards the free end of the template (14) and back, and in that the vanes (34) of the template (14) and the outer forming elements (38) are each provided with an axial passage slot for a stripper (28,30).

## Claims (Claims for the following Contracting State(s): CH, LI)

1. A method of producing a wave winding, in particular for three-phase generators, in which a given number of concentric wave-like windings is produced in that winding wire (22) from a winding nozzle (10) rotating in a circular path is wound on to a stationary template (14) disposed within the circular path and having a given number of radially projecting vanes (34), and is pressed radially inwards between the vanes (34) and is deformed by outer forming elements (38), characterised in that the deforming is carried out by individually moved outer forming elements (38) during the winding movement.

2. A method according to Claim 1, characterised in that the winding wire (22) is applied by the outer forming elements (38) against the radially inner region of the flanks of the vanes (34).

3. A method according to Claim 1 or 2, characterised in that the winding wire (22) is pressed radially inwards during the winding procedure whenever the rotating winding nozzle (10) is situated between an outer forming element (38) and the vane (34) following it in the movement direction.

4. A method according to any one of Claims 1 to 3, characterised in that already during the winding procedure windings (24) from the template (14) are slipped on to a transfer tool (26a,26b).

5. A method according to any one of Claims 1 to 4, characterised in that initially a first part of the wave winding of one phase is produced and is slipped from the template (14) on to a transfer tool (26a,26b), and then without interruption in the wire a second part of the wave winding is produced with inverse winding direction and is slipped on to the transfer tool (26a,26b) offset on the circumference in such a way that, subsequently, axially parallel portions of both parts of the wave winding, through which current flows in the same direction, are pulled into the same stator slots.

6. An apparatus for carrying out the method according to any one of Claims 1 to 5 with a winding nozzle which can be driven in rotating motion relative to a stationary template (14) with a given number of radially projecting vanes (34), and with outer forming elements (38) which can be inserted between the vanes (34) of the template (14), characterised in that a drive (42,46,48) for the outer forming elements (38) is provided which is operative during the winding procedure and by means of which, during each revolution of the winding nozzle (10), the forming elements (38) can be inserted individually between the vanes (34) of the template (14) and then withdrawn.

7. An apparatus according to Claim 6, characterised in that in the radially inner region the outer forming elements (38)are adapted to the contour of the radially inner region of the template (14,34), wherein in the radially inserted condition of the outer forming elements (38) a respective gap is left free between the latter and the template (14,34) which is only slightly wider than the diameter of the winding wire (22).

8. An apparatus according to Claim 6 or 7, characterised in that the radial length of the vanes (34,36) is adjustable.

9. An apparatus according to any one of Claims 6 to 8, characterised in that substantially within the period of time in which the rotating winding nozzle (10) is situated in the angular region between the two respectively adjacent vanes (34) the outer forming elements (38) can be withdrawn from their inner position inserted between the vanes (34) and can be re-inserted into the radially inner position, wherein each outer forming element (38) can also be already withdrawn before the winding nozzle (10) reaches the first adjacent vane (34).

10. An apparatus according to Claim 9, characterised in that the outer forming elements (38) can be withdrawn into a position radially outside the orbit of the winding nozzle (10).

11. An apparatus according to any one of Claims 6 to 10, characterised in that each outer forming element can be moved by a stationarily mounted lever (42) on which is mounted a cam roller (58) which co-operates with a guide cam (46,48) which rotates together with the winding nozzle (10) and which is substantially of circular shape with a bulge or recess extending at least approximately over the angular region between two vanes (34).

12. An apparatus according to Claim 11, characterised in that the lever (42) is mounted outside the orbit of the winding nozzle (10).

13. An apparatus according to any one of Claims 6 to 12, characterised in that in a manner known per se axially movable strippers (28,30) are mounted on a template (14,16) which is stationary during the winding procedure, which strippers during each revolution of the winding nozzle (10) carry out a short axial movement through the winding plane towards the free end of the template (14) and back, and in that the vanes (34) of the template (14) and the outer forming elements (38) are each provided with an axial passage slot for a stripper (28,30).

## Revendications (Revendications pour l'(les) Etat(s) contractant(s) suivant(s): DE, FR, GB, IT)

1. Procédé de fabrication d'un enroulement ondulé, en particulier pour alternateurs triphasés dans lequel est produit un nombre déterminé d'enroulements concentriques, en forme d'ondes, dans lequel est enroulé le fil de bobinage (22), à partir d'une buse de bobinage (10) tournant sur une piste circulaire sur un gabarit (14) fixe, disposé à l'intérieur de la piste circulaire, avec un nombre déterminé d'ailettes (34) faisant saillie radialement et il est pressé et déformé radialement vers l'intérieur pendant le mouvement d'enroulement par des éléments de mise en forme (38) extérieurs, déplacés radialement en dedans individuellement à partir de l'extérieur de la piste de rotation de la buse de bobinage (10), entre les ailettes (34).

2. Procédé selon la revendication 1,
caractérisé en ce que
le fil de bobinage (22) est appliqué par les éléments extérieurs de mise en forme (38) contre la zone radialement intérieure des flancs des ailettes (34).

3. Procédé selon la revendication 1 ou 2,
caractérisé en ce que
le fil de bobinage (22) est pressé radialement vers l'intérieur par l'élément de mise en forme extérieur (38) pendant le processus de bobinage respectivement quand la buse rotative de bobinage (10) se trouve entre un élément de mise en forme extérieur (38) et l'ailette (34) qui suit cet élément dans le sens du déplacement.

4. Procédé selon l'une des revendications 1 à 3,
caractérisé en ce que
déjà pendant le processus de bobinage des enroulements (24) sont passés à partir du gabarit (14) sur un outil de transfert (26a, 26b).

5. Procédé selon l'une des revendications 1 à 4,
caractérisé en ce que
l'on produit d'abord une première partie de l'enroulement ondulé d'une phase et on le passe à partir du gabarit (14) sur un outil de transfert (26a, 26b) et ensuite on produit sans interrompre le fil une deuxième partie de l'enroulement ondulé dans un sens d'enroulement inverse et on le passe sur l'outil de transfert (26a, 26b) en le décalant sur le pourtour d'une manière telle qu'ensuite on insère des sections des deux parties de l'enroulement ondulé, à axes parallèles, parcourues par le courant dans le même sens dans ces rainures du stator.

6. Dispositif pour la mise en oeuvre du procédé selon l'une des revendications 1 à 5,
caractérisé par
une buse de bobinage pouvant être entraînés en rotation par rapport à un gabarit fixe (14) avec un nombre déterminé d'ailettes (34), faisant saillie radialement, éléments de mise en forme extérieurs (38), que l'on peut faire entrer et ressortir au moyen d'un mécanisme d'entraînement (42, 46, 48), opérationnel pendant le processus de bobinage, lors de chaque rotation de la buse de bobinage (10), de facon individuelle à partir d'une position se trouvant en dehors de la piste de rotation de la buse de bobinage (10), entre les ailettes (34) du gabarit (14).

7. Dispositif selon la revendication 6,
caractérisé en ce que
les éléments extérieurs de mise en forme (38) sont adaptés dans la zone radialement intérieure au contour de la zone radialement intérieure du gabarit (14, 34), une fente demeurant libre, quand les éléments de mise en forme extérieurs (38) sont en position d'insertion radiale, entre ces éléments et le gabarit (14, 34), fente qui est seulement un peu plus large que le diamètre du fil de bobinage (22).

8. Dispositif selon la revendication 6 ou 7,
caractérisé en ce que
la longueur radiale des ailettes (34, 36) est réglable.

9. Dispositif selon l'une des revendications 6 à 8,
caractérisé en ce que
l'on peut faire ressortir de leur position intérieure d'insertion entre les ailettes (34) et faire entrer à nouveau dans la position radiale intérieure les éléments extérieurs de mise en forme (38) sensiblement pendant l'intervalle de temps, au cours duquel la buse de bobinage rotative (10) se trouve dans la zone angulaire comprise entre les deux ailettes respectivement voisines (34).

10. Dispositif selon l'une des revendications 6 à 8,
caractérisé en ce que
l'on peut faire ressortir les éléments extérieurs (38) de mise en forme de leur position intérieure d'insertion entre les ailettes (34) avant l'intervalle de temps, au cours duquel la buse de bobinage rotative (10) se trouve dans la zone angulaire comprise entre les deux ailettes respectivement voisines (34) et les faire entrer à nouveau dans la position radiale intérieure pendant cet intervalle de temps.

11. Dispositif selon l'une des revendications 6 à 10,
caractérisé en ce que
chaque élément extérieur de mise en forme peut être déplacé par un levier (42) monté à poste fixe, sur lequel est monté un galet de guidage (58), qui coopère avec une courbe de guidage (46, 48), qui tourne en même temps que la buse de bobinage (10), courbe de guidage (46, 48), qui a sensiblement une forme circulaire avec un ventre ou un creux qui s'étend au moins sur la zone angulaire comprise entre deux ailettes (34).

12. Dispositif selon la revendication 11,
caractérisé en ce que
le levier (42) est monté en dehors de la piste de rotation de la buse de bobinage (10).

13. Dispositif selon l'une des revendications 6 à 12,
caractérisé en ce que
• des racloirs mobiles axialement (28, 30) sont montés sur le gabarit (14, 16), fixe, pendant le processus de bobinage, racloirs qui, lors de chaque rotation de la buse de bobinage (10), exécutent un court mouvement axial à travers le plan du bobinage en direction de l'extrémité libre du gabarit (14) et en sens inverse, et
• les ailettes (34) du gabarit (14) et les éléments extérieurs de mise en forme (38) sont pourvus respectivement d'une fente de passage axial pour un racloir (28,30).

## Revendications (Revendications pour l'(les) Etat(s) contractant(s) suivant(s): CH, LI)

1. Procédé de fabrication d'un enroulement ondulé, en particulier pour alternateurs triphasés, dans lequel est produit un nombre déterminé d'enroulements concentriques, en forme d'ondes, dans lequel est enroulé le fil de bobinage (22), à partir d'une buse de bobinage (10) tournant sur une piste circulaire sur un gabarit (14) fixe, disposé à l'intérieur de la piste circulaire, avec un nombre déterminé d'ailettes (34) faisant saillie radialement et il presse et déforme radialement vers l'intérieur par des éléments de mise en forme extérieurs (38), compris entre les ailettes (34),
caractérisé en ce que
la déformation a lieu au moyen d'éléments de mise en forme (38) extérieurs déplacés individuellement pendant le mouvement de bobinage.

2. Procédé selon la revendication 1,
caractérisé en ce que
le fil de bobinage (22) est appliqué par les éléments extérieurs de mise en forme (38) contre la zone radialement intérieure des flancs des ailettes (34).

3. Procédé selon la revendication 1 ou 2,
caractérisé en ce que
le fil de bobinage (22) est pressé radialement vers l'intérieur, pendant le processus de bobinage respectivement quand la buse rotative de bobinage (10) se trouve entre un élément de mise en forme extérieur (38) et l'ailette (34) qui suit cet élément dans le sens du déplacement.

4. Procédé selon l'une des revendications 1 à 3,
caractérisé en ce que
déjà pendant le processus de bobinage, des enroulements (24) sont passés à partir du gabarit (14) sur un outil de transfert (26a, 26b).

5. Procédé selon l'une des revendications 1 à 4,
caractérisé en ce que
l'on produit d'abord une première partie de l'enroulement ondulé d'une phase et on le passe à partir du gabarit (14) sur un outil de transfert (26a, 26b) et ensuite on produit sans interrompre le fil une deuxième partie de l'enroulement ondulé dans un sens d'enroulement inverse et on le passe sur l'outil de transfert (26a, 26b) en le décalant sur le pourtour d'une manière telle qu'ensuite on insère des sections des deux parties de l'enroulement ondulé, à axes parallèles, parcourues par le courant dans le même sens dans ces rainures du stator.

6. Dispositif pour la mise en oeuvre du procédé selon l'une des revendications 1 à 5, avec une buse de bobinage pouvant être entraînée en rotation par rapport à un gabarit fixe (14) avec un nombre déterminé d'ailettes (34) faisant saillie radialement, éléments de mise en forme extérieurs (38) que l'on peut faire entrer entre les ailettes (34) du gabarit (14),
caractérisé en ce qu'
il y a un mécanisme d'entraînement (42, 46, 48) opérationnel pendant le processus de bobinage, des éléments de mise en forme extérieurs (38), grâce auquel les éléments de mise en forme (38) peuvent entrer et ressortir, à chaque tour de la buse de bobinage (10), individuellement de façon radiale entre les ailettes (34) du gabarit (14).

7. Dispositif selon la revendication 6,
caractérisé en ce que
les éléments extérieurs de mise en forme (38) sont adaptés dans la zone radialement intérieure au contour de la zone radialement intérieure du gabarit (14, 34), une fente demeurant libre quand les éléments de mise en forme extérieurs (38) sont en position d'insertion radiale, entre ces éléments et le gabarit (14, 34), fente qui est seulement un peu plus large que le diamètre du fil de bobinage (22).

8. Dispositif selon la revendication 6 ou 7,
caractérisé en ce que
la longueur radiale des ailettes (34, 36) est réglable.

9. Dispositif selon l'une des revendications 6 à 8,
caractérisé en ce que
l'on peut faire ressortir de leur position intérieure d'insertion entre les ailettes (34) et faire entrer à nouveau dans la position radiale intérieure les éléments extérieurs de mise en forme (38) sensiblement à l'intérieur de l'intervalle de temps au cours duquel la buse de bobinage rotative (10) se trouve dans la zone de bobinage comprise entre les deux ailettes respectivement voisines (34), chaque élément extérieur de mise en forme (38) pouvant être aussi déjà retiré avant que la buse de bobinage (10) atteigne la première ailette voisine (34).

10. Dispositif selon la revendication 9,
caractérisé en ce que
les éléments extérieurs de mise en forme (38) peuvent être retirés jusque dans une position qui se trouve radialement en dehors de la piste de rotation de la buse de bobinage (10).

11. Dispositif selon l'une des revendications 6 à 10,
caractérisé en ce que
chaque élément extérieur de mise en forme peut être déplacé par un levier (42) monté à poste fixe, sur lequel est monté un galet de guidage (58), qui coopère avec une courbe de guidage (46, 48), qui tourne en même temps que la buse de bobinage (10), courbe de guidage (46, 48), qui a sensiblement une forme circulaire avec un ventre ou un creux qui s'étend au moins sur la zone angulaire comprise entre deux ailettes (34).

12. Dispositif selon la revendication 11,
caractérisé en ce que
le levier (42) est monté en dehors de la piste de rotation de la buse de bobinage (10).

13. Dispositif selon l'une des revendications 6 à 12,
caractérisé en ce que
d'une manière connue en soi des racloirs mobiles axialement (28, 30) sont montés sur un gabarit (14, 16), fixe, pendant le processus de bobinage, racloirs qui, lors de chaque rotation de la buse de bobinage (10), exécutent un court mouvement axial à travers le plan du bobinage en direction de l'extrémité libre du gabarit (14) et en sens inverse, et les ailettes (34) du gabarit (14) et les éléments extérieurs de mise en forme (38) sont pourvus respectivement d'une fente axiale de passage pour un racloir (28,30).
